# EUROPÄISCHE PATENTSCHRIFT

(11) **EP 2 748 056 B1**
(45) Veröffentlichungstag und Bekanntmachung des Hinweises auf die Patenterteilung: **06.03.2019**
(21) Anmeldenummer: 12748211.5
(22) Anmeldetag: 15.08.2012
(51) Int. Cl.: B62K 21/12

(54) **FAHRRADGRIFF**
BICYCLE HAND GRIP
POIGNÉE DE BICYCLETTE

(30) Priorität: 24.08.2011 DE 202011104764 U
(43) Veröffentlichungstag der Anmeldung: 02.07.2014
(73) Patentinhaber: Ergon International GmbH, 56070 Koblenz (DE)
(72) Erfinder: TOFAUTE, Kim, 56112 Lahnstein (DE); HOLZSCHUHER, Jan, Ernst, 56068 Koblenz (DE); ARNOLD, Franc, 56068 Koblenz (DE)
(74) Vertreter: dompatent von Kreisler Selting Werner - Partnerschaft von Patent- und Rechtsanwälten mbB
(86) Internationale Anmeldenummer: PCT/EP2012/065965
(87) Internationale Veröffentlichungsnummer: WO 2013/026756

(56) Entgegenhaltungen:
- EP-A1- 0 053 404
- EP-A1- 1 008 511
- EP-A1- 2 098 444
- EP-A1- 2 181 813
- EP-A2- 1 712 460
- EP-A2- 2 423 088
- WO-A1-2011/021060
- WO-A1-2011/021132
- WO-A2-2004/033283
- BE-A- 486 964
- CN-Y- 201 305 097
- DE-U1- 9 112 567
- FR-A- 1 014 025
- US-A- 366 775
- US-A- 599 359
- US-A- 2 100 012
- US-A1- 2008 284 126
- Peter Barzel ET AL: "Die neue Fahrradtechnik Material Konstruktion Fertigung" In: "Die neue Fahrradtechnik : Material, Konstruktion, Fertigung", 1 January 2008 (2008-01-01), BVA - Bielefelder Verlag GmbH & Co. KG, Bielefeld, XP055279901, ISBN: 978-3-87073-322-3 pages 178-181, * page 178 - page 181; figures 53-59 *

## Beschreibung

Die Erfindung betrifft einen Fahrradlenker mit zwei entgegen der Fahrtrichtung gekrümmten Lenkerenden. Dokument US599359 offenbart einen derartigen Fahrradlenker, bei dem jedes Lenkerende einen Fahrradgriff aufweist und auf den der Oberbegriff von Anspruch 1 basiert. Beispielsweise aus EP 1 537 014 ist ein ergonomischer Fahrradgriff bekannt. Dieser weist ein im montierten Zustand in Richtung des Fahrers weisendes Handballen-Auflageelement auf. Hierbei handelt es sich um einen Ansatz, dessen Oberseite eine Handballen-Auflagefläche ausbildet. Die Handballen-Auflagefläche ist in montiertem Zustand im Wesentlichen horizontal ausgerichtet. Durch eine derartige ergonomische Unterstützung des Handballens ist ein Abknicken des Handgelenks, wie es bei herkömmlichen zylindrischen Fahrradgriffen auftritt, vermieden oder zumindest verringert. Der Unterarm geht somit im Wesentlichen gerade in die Hand über, so dass insbesondere die Problematik des Einschlafens der Finger bei längeren Fahrten vermieden ist. Ferner bewirkt die eine insbesondere weiche bzw. elastische Oberfläche aufweisende Handballenauflage eine Handentlastung. Hierdurch ist der Komfort verbessert.
Untersuchungen haben gezeigt, dass derartige ergonomisch ausgebildete Fahrradgriffe nicht bei allen Lenkerformen zu der gewünschten Handentlastung führen. Insbesondere bei gekrümmten Lenkern, d. h. bei Lenkern, die in Richtung des Fahrers gebogen sind, kann die gewünschte Handentlastung mit derartigen Griffen zumindest nicht vollständig erzielt werden. Es handelt sich hierbei um Lenker wie sie häufig bei Tourenrädern verwendet werden.
WO 2011/021132 A1 offenbart einen Fahrradgriff für einen geraden Fahrradlenker mit einem Innenteil zur Lenkeraufnahme sowie einem sich an das Innenteil anschließenden Außenteil. Dabei ist das Außenteil um eine Achse verschwenkbar, wobei die Schwenkachse in einem Winkel gegenüber dem Innenteil vorgesehen ist.

Aufgabe der Erfindung ist es, einen gekrümmten Fahrradlenker mit Fahrradgriffen zu schaffen, so dass eine Handentlastung erzielt werden kann.

Die Lösung der Aufgabe erfolgt erfindungsgemäß durch die Merkmale des Anspruchs 1.

Der erfindungsgemäße Fahrradlenker weist zwei entgegen der Fahrtrichtung gekrümmte Lenkerenden auf, wobei jedes Lenkerende einen Fahrradgriff aufweist. Die Fahrradgriffe weisen einen Innenteil und einen Außenteil auf. Der Innenteil ist derjenige Teil des Griffs, der in montiertem Zustand in Richtung des Lenkervorbaus nach innen weist. Der Außenteil schließt sich nach außen an den Innenteil an. Bei einem herkömmlichen Fahrradgriff würden das Innenteil und das Außenteil ein gemeinsames hohlzylindrisches Element ausbilden. Erfindungsgemäß ist das Außenteil gegenüber dem Innenteil abgewinkelt. In montiertem Zustand weist der Fahrradgriff somit in Draufsicht eine abgewinkelte bzw. gekrümmte Form auf. Die Abwinklung des Außenteils ist in montiertem Zustand derart, dass das Außenteil nach außen abgewinkelt ist. Bei einem gekrümmten Lenker, dessen Lenkerenden entgegen der Fahrtrichtung in Richtung des Fahrers gekrümmt sind, wird dieser Krümmung des Lenkers durch das Außenteil des Fahrradgriffs entgegengewirkt. Bezogen auf die Fahrtrichtung bzw. die Rahmenmittelebene weist das Außenteil des Griffs bzw. eine Mittellinie des Außenteils des Griffs zu der Fahrtrichtung einen größeren Winkel auf als das Lenkerende des gekrümmten Lenkers.

In einer Standard-Greifposition, in der der Fahrer im Wesentlichen das Außenteil des Fahrradgriffs greift, bewirkt das abgewinkelte Außenteil ein Drehen des Handgelenks nach innen. Bei gekrümmten Lenkern mit einem üblichen zylindrischen Fahrradgriff ist das Handgelenk nach außen abgewinkelt, so dass zwischen einer Außenseite des Unterarms und einer Außenseite des Handtellers im Bereich des kleinen Fingers ein Abwinkeln erfolgt. Durch Verwenden des abgewinkelten Fahrradgriffs bei gekrümmten Lenkern wird das Handgelenk nach innen zurückgedreht. Der Winkel zwischen der Außenseite des Unterarms und dem entsprechenden Bereich des Handtellers schließt somit einen größeren Winkel ein. Idealerweise geht die Außenseite des Unterarms im Wesentlichen geradlinig in die Außenseite des Handtellers über. Bei dieser Idealstellung ist sodann das Handgelenk des Fahrers in Draufsicht nicht mehr abgewinkelt. Hierdurch kann die Ergonomie deutlich verbessert werden. Die Gefahr des Einschlafens der Finger ist hierdurch erheblich verringert.

Vorzugsweise schließt eine Mittellinie des Außenteils gegenüber einer Mittellinie des Innenteils einen Winkel ein. Dieser liegt im Bereich von 120° - 150°, wobei der Winkel bei montiertem Fahrradgriff an der in Fahrtrichtung weisenden Vorderkante des Griffs gemessen wird. Vorzugsweise liegt der Winkel im Bereich von 130° - 140°. Vorzugsweise ist der Winkelbereich hierbei in Abhängigkeit der Krümmung des Lenkers gewählt. Hierdurch gleicht der Winkel die Krümmung des Lenkers derart aus, dass das Außenteil des Fahrradgriffs in montiertem Zustand eine Mittellinie aufweist, die bei gerader Lenkerstellung im Wesentlichen senkrecht zur Fahrtrichtung bzw. senkrecht zur Rahmenmittelebene ist. Gegebenenfalls kann das Außenteil leicht in Richtung des Fahrers geneigt sein, so dass zwischen der Mittellinie des Außenteils und einer Senkrechten zur Fahrradmittelebene ein Winkel von 0° - 30° besteht.

In besonders bevorzugter Ausführungsform ist die Abwinklung des Außenteils gegenüber dem Innenteil derart ausgebildet, dass eine vordere, im montierten Zustand in Fahrtrichtung weisende, gemeinsame Vorderkante des Innenteils und des Außenteils konkav gekrümmt ist. Hierdurch ist ein fließender stufenfreier Übergang im Bereich der Vorderkante und somit ein angenehmes Greifgefühl, realisiert.

Vorzugsweise geht die Außenseite des Innenteils stufenfrei in die Außenseite des Außenteils über. Die gesamte Oberfläche des Fahrradgriffs ist somit vorzugsweise glatt bzw. stufenfrei ausgebildet. Hierdurch ist das Auftreten unangenehmer Druckstellen vermieden.

Zur weiteren Verbesserung der Ergonomie des Fahrradgriffes kann das Außenteil zusätzlich mit einem Handballen-Auflageelement verbunden, insbesondere einstückig mit diesem ausgebildet sein. Das Handballen-Auflageelement weist hierbei in montiertem Zustand des Fahrradgriffs entgegen der Fahrtrichtung, d. h. in Richtung des Fahrers. Das Handballen-Auflageelement dient entsprechend dem in EP 1 537 014 beschriebenen Handballen-Auflageelement zur Auflage des Handballens und somit zur Entlastung des Handgelenks. Vorzugsweise ist das Handballen-Auflageelement derart ausgebildet, dass eine Hinterkante, d. h. die in montiertem Zustand des Fahrradgriffs in Richtung des Fahrers weisende Kante des Handballen-Auflageelements im Wesentlichen parallel zur Mittellinie des Außenteils verläuft. Hierbei weicht die Parallelität zwischen der Hinterkante und der Mittellinie vorzugsweise um weniger als ± 10° ab.

Bei einer weiteren bevorzugten Ausführungsform ist, vorzugsweise zusätzlich zu dem Handballen-Auflageelement, an einer Oberseite des Außenteils eine Auswölbung vorgesehen. Durch diese hügelartige Auswölbung an der Oberseite des Außenteils kann eine zusätzliche Unterstützung der Korrektur der Handstellung erfolgen.

Vorzugsweise ist der Fahrradgriff derart aufgebaut, dass eine innenliegende Hülse aus vorzugsweise härterem Material von dem Innenteil, das vorzugsweise aus weicherem Material ist, umgeben ist. Gegebenenfalls ragt die Hülse auch zumindest teilweise in den Außenteil des Fahrradgriffs. Die Hülse ist hierbei derart ausgebildet, dass eine Innenseite der Hülse an der Außenseite des Lenkers in montiertem Zustand anliegt. Die vorzugsweise hohlzylindrisch ausgebildete Hülse kleidet insofern vorzugsweise die zur Lenkeraufnahme dienende Öffnung des Fahrradgriffs aus. Hierdurch kann ein sicheres Halten des Fahrradgriffs auf dem Lenker realisiert werden. Besonders bevorzugt ist es hierbei, dass eine Fixierung des Fahrradgriffs mit Hilfe eines Klemmelements erfolgt. Dies ist insbesondere in Verbindung mit einer Hülse vorteilhaft, da das beispielsweise schellenartig ausgebildete Klemmelement ein freies Ende der Hülse umgeben kann, so dass durch Schließen des Klemmelements ein klemmendes Fixieren der Hülse auf der Außenseite des Lenkers erfolgt.

In einer bevorzugten Weiterbildung ist die Hülse mit einem insbesondere flügelförmigen Ansatz verbunden bzw. einstückig mit diesem ausgebildet. Der Ansatz ragt skelettartig in das Handballen-Auflageelement und dient somit zur Versteifung des Handballen-Auflageelements. Insbesondere wenn der erfindungsgemäße Fahrradgriff ein Handballen-Auflageelement aufweist, ist es besonders bevorzugt, eine derartige Hülse mit flügelförmigem Ansatz vorzusehen und ferner den Fahrradgriff über ein Klemmelement an dem Lenker zu fixieren. Dies ist insofern vorteilhaft, da von dem Handballen Kräfte auf das Handballen-Auflageelement übertragen werden und durch das klemmende Befestigen ein Verdrehen des Fahrradgriffs auf dem Lenker vermieden ist. Die Ausgestaltung der innenliegenden Hülse, insbesondere auch in Verbindung mit dem flügelförmigen Ansatz und dem Klemmelement ist vorzugsweise wie in EP 1 537 014 beschrieben, ausgebildet. Bevorzugt ist es jedoch, dass das Klemmelement an dem Innenteil, insbesondere an der in Richtung des Lenkervorbaus weisenden Innenseite des Innenteils angeordnet ist.

Bei einer weiteren bevorzugten Ausführungsform der Erfindung verläuft eine Hinterkante des Handballen-Auflageelements im Wesentlichen parallel zur Mittellinie des Außenteils. Die Hinterkante ist hierbei diejenige in Richtung des Benutzers weisende Kante im montierten Zustand. Zur weiteren Verbesserung der Ergonomie des Fahrradgriffs und somit zur Verbesserung der Handstellung ist die Außenkante in Rückansicht, insbesondere nach unten geschwungen. Im montierten Zustand ist die in Richtung des Benutzers weisende Außenkante des Handballen-Auflageelements derart zunächst etwa auf der Mittellinie des Außenteils angeordnet und verläuft sodann geschwungen nach unten, d.h. in Richtung der Fahrbahn.

In besonders bevorzugter Ausführungsform ist der Fahrradgriff klemmend am Lenker fixiert. Hierzu ist es bevorzugt, dass der Fahrradgriff eine Innenhülse, insbesondere aus festem Kunststoffmaterial aufweist. Die Innenhülse ist an ihrer Innenseite oder an ihrer Außenseite in bevorzugter Ausführungsform von einem Klemmmittel umgeben, wobei die Hülse in diesem Bereich mindestens einen Längsschlitz aufweisen kann. Die Innenseite der Hülse ist diejenige im montierten Zustand in Richtung des Lenkerinneren weisende Seite des Fahrradgriffs. Entsprechend ist die Außenseite die nach außen vom Lenker wegweisende Seite des Fahrradgriffs.
Bevorzugt ist es ein Klemmelement vorzusehen, dessen Außenkontur derart ausgebildet ist, dass es in dem Fahrradgriff bzw. die Außenkontur des Fahrradgriffs integriert ist. Hierdurch sind störende Absätze und Stufen, die zu Druckstellen an der Hand führen können vermieden.
Bevorzugt ist das Klemmen an der Außenseite des Fahrradgriffs, da in diesem Bereich keine weiteren Elemente, wie Bremsgriffe und Schalthebel am Lenker befestigt sind und die entsprechende Klemme insofern leichter zugänglich ist.
Um auch bei einem an der Außenseite des Außenteils des Fahrradgriffs angeordneten Klemmelement eine gute Integration zu erzielen, weist das Handballen-Auflageelement einen in das Klemmelement hineinragenden ersten Ansatz auf. Der erste Ansatz ist vorzugsweise radial neben dem Klemmelement angeordnet und ragt axial bzw. in Längsrichtung in das Klemmelement hinein. Vorzugsweise weist das Außenteil einen zweiten Ansatz auf, der ebenfalls in das Klemmmittel hineinragt, wobei die beiden Ansätze vorzugsweise einander gegenüberliegend angeordnet sind. Die beiden Ansätze bilden somit einen Abstand zueinander aus. In der hierdurch ausgebildeten Öffnung wird das Klemmelement angeordnet.

Bei einem in bevorzugter Ausführungsform im äußeren Bereich des Außenteils angeordneten Klemmelement ist es bevorzugt, dass es eine konvex gekrümmte Außenseite aufweist. Diese geht insbesondere stufenfrei in die Außenseiten des ersten und/oder zweiten Ansatzes über.

Des Weiteren kann das Außenteil mit einem Barend verbunden, insbesondere einstückig mit diesem ausgebildet sein. Das Barend oder Haltehorn dient zum Wechseln der Greifposition und ist vorzugsweise derart ausgerichtet, dass es im Wesentlichen parallel zur Fahrtrichtung nach vorne, d. h. in Fahrtrichtung, weist.

Nachfolgend wird die Erfindung betreffend einen gekrümmten Fahrradlenker mit Fahrradgriffen anhand bevorzugter Ausführungsformen der Fahrradgriffe unter Bezugnahme auf die anliegenden Zeichnungen näher erläutert.

Es zeigen:
- Figur 1: eine schematische Draufsicht einer ersten bevorzugten Ausführungsform eines Fahrradgriffs,
- Figur 2: eine schematische Seitenansicht in Richtung des Pfeils II in Figur 1
- Figur 3: eine schematische Seitenansicht eines Klemmelements in Richtung des Pfeils III in Figur 1,
- Figur 4: eine schematische Draufsicht einer innerhalb des Fahrradgriffs angeordneten Hülse mit flügelförmigem Ansatz,
- Figur 5: eine schematische Draufsicht einer zweiten bevorzugten Ausführungsform eines Fahrradgriffs,
- Figur 6: eine schematische Seitenansicht in Richtung des Pfeils VI in Figur 5 und
- Figur 7: eine schematische Seitenansicht in Richtung des Pfeils VII in Figur 5.

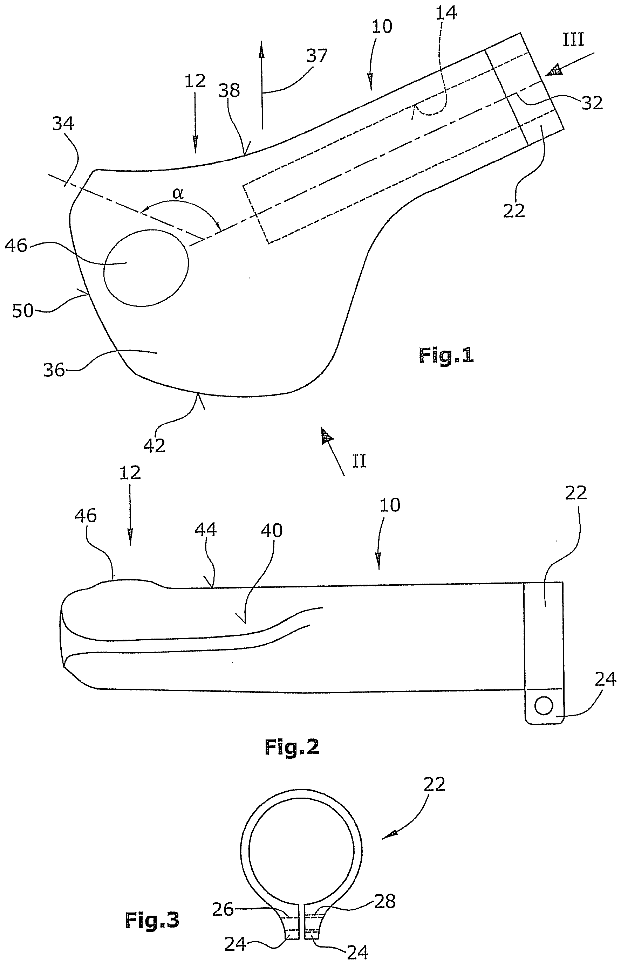

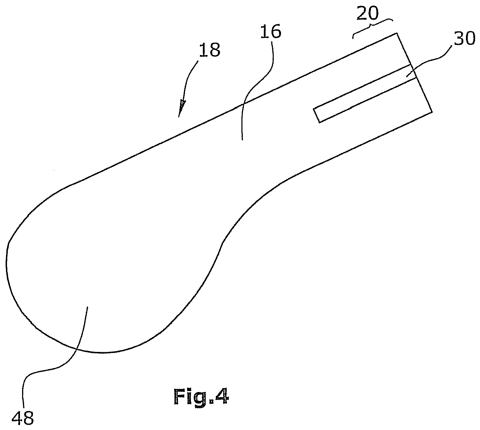

Der Fahrradgriff weist einen Innenteil 10 und einen Außenteil 12 auf, wobei der Innenteil 10 in den Außenteil 12 übergeht und insbesondere die beiden Teile einstückig ausgebildet sind. In dem Innenteil 10 ist eine kreiszylindrische Öffnung 14 angeordnet, die durch einen kreiszylindrischen Teil 16 (Figur 4) einer Hülse 18 ausgebildet ist. Sofern es sich bei dem Fahrradgriff um einen Fahrradgriff handelt, der klemmend an dem Lenker befestigt wird, ragt die Hülse um einen Klemmbereich 20 aus dem Innenteil 10 vor, so dass ein schellenartig ausgebildetes Klemmelement 22 (Figuren 1 und 3) vorgesehen sein kann. Das Klemmelement 22 weist in montiertem Zustand insbesondere nach unten weisende Ansätze 24 auf. In diesen ist eine Bohrung 26 mit Gewinde 28 angeordnet, so dass in Figur 3 von links eine nicht dargestellte Klemmschraube zum Fixieren angeordnet werden kann. Ferner ist es bevorzugt, dass die Hülse 18 im Bereich 22, in dem die Klemmung erfolgt, einen Hülsenschlitz 30 aufweist.

Das in seiner Außenkontur im Wesentlichen zylindrische Innenteil weist eine Mittellinie auf, die in montiertem Zustand mit der Mittellinie 32 des Lenkerendes zusammenfällt. Ferner weist auch das Außenteil eine Mittellinie 34 auf, deren Lage unabhängig von einem Handballen-Auflageelement 36 ist. Die Mittellinie 34 des Außenteils 12 weist gegenüber der Mittellinie 32 des Innenteils 10 einen Winkel α auf, der, bezogen auf die Fahrtrichtung 37, in Fahrtrichtung angeordnet ist. Der Winkel α liegt vorzugsweise in einem Bereich von 100° - 170°, insbesondere 120° - 150° und besonders bevorzugt in dem Bereich von 130° - 140°. Der erfindungsgemäße Fahrradgriff ist somit derart ausgebildet, dass er, bezogen auf die Fahrtrichtung 37, einen Außenteil 12 aufweist, der in Richtung der Fahrtrichtung 37 gegenüber dem Innenteil 10 abgewinkelt ist.

Im dargestellten Ausführungsbeispiel ist somit eine in Fahrtrichtung weisende Vorderkante 38 des Fahrradgriffs konkav ausgebildet. Bei der Vorderkante 38 handelt es sich um eine gemeinsame Vorderkante des Innenteils 10 und des Außenteils 12.

Das flügelförmig ausgebildete Handballen-Auflageelement bildet eine Handballen-Auflagefläche 40 aus. Beim herkömmlichen Greifen des Fahrradgriffs liegt der Handballen somit auf der Handballen-Auflagefläche 40 auf. Aufgrund der erfindungsgemäßen Abwinklung zwischen dem Innenteil 10 und dem Außenteil 12 erfolgt ein Zurückdrehen des Handgelenks entgegen der durch die Krümmung des Lenkers hervorgerufenen Abwinklung des Handgelenks. Hierdurch ist eine ergonomische Haltung des Handgelenks gewährleistet. Ferner soll der Fahrradgriff vorzugsweise derart am Lenker montiert werden, dass die Handballen-Auflagefläche 40 im Wesentlichen horizontal gegebenenfalls leicht in Richtung des Fahrers fallend angeordnet ist.

Eine Hinterkante 42 (Figur 1) des Handballen-Auflageelements 36 ist vorzugsweise derart ausgerichtet, dass sie im Wesentlichen parallel zu der Mittellinie 34 des Außenteils 12 verläuft.

Bei einer bevorzugten Weiterbildung der Erfindung ist an einer Oberseite 44 des Außenteils 12 eine Auswölbung 46 vorgesehen. Durch die Auswölbung, die etwa in der Mitte des Außenteils 12 angeordnet ist, wird die Korrektur der Handstellung unterstützt.

Die Hülse 18 (Figur 4), die insbesondere bei einem klemmenden Befestigen des Fahrradgriffs mit Hilfe eines Klemmelements 22 vorgesehen ist, weist in bevorzugter Ausführungsform einen flügelförmigen Ansatz 48 auf. Dieser ragt skelettartig in das Handballen-Auflageelement 36.

Ferner kann mit einer Außenseite 50 des Außenteils 12 ein nicht dargestelltes Barend verbunden, insbesondere einstückig mit dem Außenteil 12 ausgebildet sein. Das Barend oder Haltehorn ist hierbei derart angeordnet, dass es im Wesentlichen in Fahrtrichtung 37 weist und in montiertem Zustand gegenüber einer Horizontalen leicht steigend ausgebildet ist. Hierdurch ist eine zweite Greifposition ausgebildet, um die Hand weiter zu entlasten.

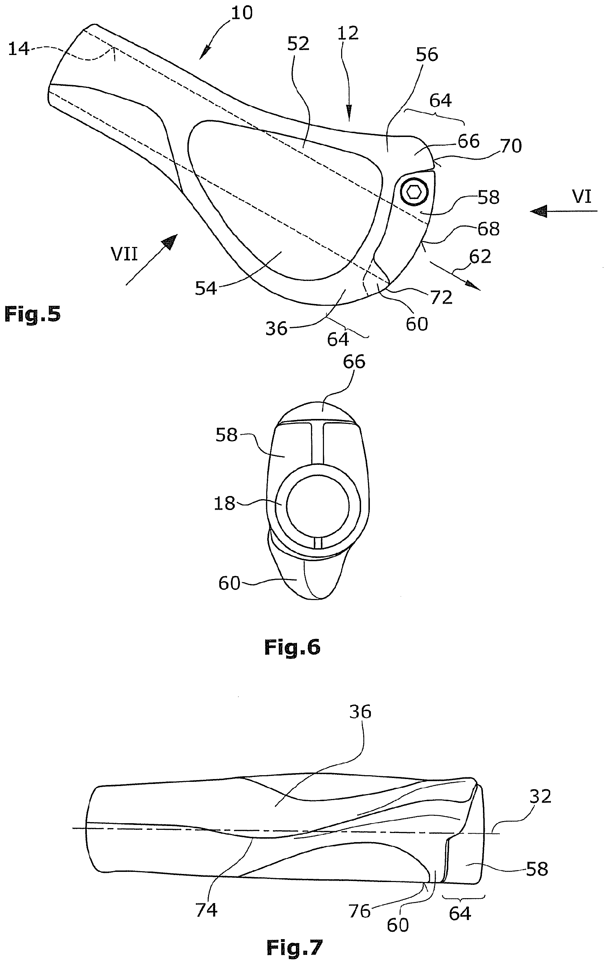

Bei einer weiteren in Figur 5 bis 7 dargestellten bevorzugten Ausführungsform eines Fahrradgriffs, durch die grundsätzlich dieselben Effekte wie durch den anhand der Figur 1 bis 4 dargestellten Fahrradgriff erzielt werden, sind ähnliche oder identische Bauteile mit den selben Bezugszeichen gekennzeichnet.

Der in Figur 5 dargestellte Fahrradgriff, bei dem es sich im montierten Zustand um einen rechten Fahrradgriff handelt, weist ebenfalls ein Innenteil 10 und ein Außenteil 12 auf. Eine innenliegende kreiszylindrische Öffnung 14 dient zur Befestigung auf einem Fahrradlenker, wobei innerhalb der Öffnung 14 vorzugsweise eine Hülse, wie in der ersten Ausführungsform beschrieben, angeordnet ist. Die Hülse kann, wie gestrichelt dargestellt, einander gegenüberliegende Ansätze 52,54 aufweisen. Der Ansatz 54 ragt in das Handteller-Auflageelement 36 und weist somit im Wesentlichen entgegen einer Fahrtrichtung 37. Entsprechend ragt der gegenüberliegende Ansatz 52 in den in Fahrtrichtung weisenden Teil 56 des Außenteils 12.

Besonders bevorzugt bei der in Figur 5 bis 7 dargestellten Ausführungsform ist, dass ein Klemmelement 58 an einer Außenseite des Griffs, d.h. bei einem rechten Fahrradgriff auf der rechten Seite angeordnet ist. Das Klemmelement 58 umgibt, wie anhand der ersten Ausführungsform beschrieben und in Figur 6 sichtbar, die Hülse 18 zum klemmenden Befestigen der Hülse und somit des Fahrradgriffs am Lenker.

Das Handballen-Auflageelement 36 weist in seinem entgegen der Fahrtrichtung 37, d.h. auf der dem Benutzer zuweisenden Seite eine nach außen gerichteten Ansatz 60 auf. Dieser ragt in den Bereich des Klemmelements 58 hinein. Der erste Ansatz 60 ragt somit in Längsrichtung 62 des Griffs in einen durch die Klammern dargestellten Klemmbereich 64. Senkrecht zur Längsrichtung 62 liegt der erste Ansatz 60 außerhalb des Klemmmittels 58.

In besonders bevorzugter Ausführungsform weist auch das Teil 56 des Außenteils 12 einen zweiten Ansatz 66 auf. Dieser ragt ebenfalls in Längsrichtung 62 in den Klemmbereich 64 des Klemmelements 58 hinein, ist jedoch senkrecht zur Längsrichtung 62 neben diesem angeordnet.

Durch das Vorsehen der beiden Ansätze 60,66 kann das Klemmmittel in den Griff integriert werden. Insbesondere geht eine vorzugsweise konvex gekrümmte Außenseite 68 des Klemmelements 58 in ebenfalls konvex gekrümmte Außenseiten 70,72 der beiden Ansätze 60,66 über. Auch die Oberseite und die Unterseite des Klemmelements 58 gehen in die Oberseite des Außenteils 12 bzw. in die Unterseite des Außenteils 12 in bevorzugter Ausführungsform stufenfrei über.

Zur Verbesserung der Ergonomie der Handhaltung ist das Handballen-Auflageelement 36 derart ausgebildet, dass eine in Richtung des Fahrers weisende Außenkante 74 (Figur 7) geschwungen ausgebildet ist. Beginnend nahe einer Oberseite 76 des Außenteils verläuft die Außenkante 74 geschwungen nach unten, um sodann wiederum im Wesentlichen parallel zu einer Mittellinie 32 des Fahrradgriffs zu verlaufen.

## Patentansprüche

1. Fahrradlenker mit
zwei in montiertem Zustand des Fahrradlenkers entgegen der Fahrtrichtung in Richtung des Fahrers gekrümmten Lenkerenden,
wobei jedes Lenkerende einen Fahrradgriff aufweist, **dadurch gekennzeichnet, dass** der jeweilige Fahrradgriff mit
einem eine Öffnung (14) zur Lenkeraufnahme aufweisenden Innenteil (10), das in montiertem Zustand in Richtung eines Lenkervorbaus nach innen weist, und einem sich an das Innenteil nach außen anschließenden Außenteil (12) versehen ist, wobei das Außenteil (12) gegenüber dem Innenteil (10) in montiertem Zustand in Draufsicht abgewinkelt ist und wobei das Außenteil (12) der Krümmung des Lenkers entgegenwirkt, so dass in einer Standard-Greifposition, in der der Fahrer im Wesentlichen das Außenteil (12) des Fahrradgriffs greift,aufgrund der Abwinklung zwischen dem Innenteil (10) und dem Außenteil (12) ein Zurückdrehen des Handgelenks entgegen der durch die Krümmung des Lenkers hervorgerufenen Abwinklung des Handgelenks erfolgt.

2. Fahrradlenker nach Anspruch 1, **dadurch gekennzeichnet, dass** die Außenseite des Innenteils (10) stufenfrei in die Außenseite des Außenteils (12) übergeht.

3. Fahrradlenker nach einem der Ansprüche 1 oder 2, **dadurch gekennzeichnet, dass** eine vordere, in Fahrtrichtung (37) weisende gemeinsame Vorderkante (38) des Innenteils (10) und des Außenteils (12) konkav gekrümmt ist.

4. Fahrradlenker nach einem der Ansprüche 1-3, **dadurch gekennzeichnet, dass** das Außenteil (12) ein entgegen der Fahrtrichtung (37) weisendes Handballen-Auflageelement (36) aufweist.

5. Fahrradlenker nach einem der Ansprüche 1-4, **dadurch gekennzeichnet, dass** eine Hinterkante (74) des Handballen-Auflageelements (36) nach unten geschwungen ausgebildet ist.

6. Fahrradlenker nach einem der Ansprüche 1-5, **dadurch gekennzeichnet, dass** das Außenteil (12) an einer Oberseite (44) eine Auswölbung (46) zur Unterstützung der Korrektur der Handstellung aufweist.

7. Fahrradlenker nach einem der Ansprüche 1-6, **gekennzeichnet durch** eine innenliegende, vom Innenteil (10) umgebene Hülse (18), die vorzugsweise die Öffnung (14) ausbildet.

8. Fahrradlenker nach Anspruch 7, **dadurch gekennzeichnet, dass** mit der Hülse (18) ein insbesondere flügelförmiger Ansatz (38) verbunden ist, der in das Handballen-Auflageelement (36) ragt.

9. Fahrradlenker nach einem der Ansprüche 1-8, **gekennzeichnet durch** ein vorzugsweise am Innenteil (10) angeordnetes Klemmelement (22) zum klemmenden Fixieren des Fahrradgriffs am Lenker.

10. Fahrradlenker nach einem der Ansprüche 1-8, **gekennzeichnet durch** ein vorzugsweise am Außenteil (12) angeordnetes Klemmelement (58), das vorzugsweise in einer Außenkontur des Außenteils (12) integriert ist.

11. Fahrradlenker nach Anspruch 10, **dadurch gekennzeichnet, dass** das Handballen-Auflageelement (36) einen in das Klemmmittel (58) hineinragenden ersten Ansatz (60) aufweist.

12. Fahrradlenker nach Anspruch 10 oder 11, **dadurch gekennzeichnet, dass** das Außenteil (12) einen in das Klemmmittel (58) hineinragenden zweiten Ansatz (66) aufweist.

13. Fahrradlenker nach einem der Ansprüche 10-12, **dadurch gekennzeichnet, dass** eine Außenseite (68) des Klemmmittels (58) konvex gekrümmt ist.

14. Fahrradlenker nach einem der Ansprüche 1-13, **dadurch gekennzeichnet, dass** das Außenteil (12) mit einem Barend verbunden, vorzugsweise einstückig ausgebildet ist.

## Claims

1. A bicycle handlebar, comprising
two handlebar ends curved counter to the driving direction towards the driver in the mounted state of said bicycle handlebar,
wherein each handlebar end comprises a bicycle hand grip,
**characterized in that**
said respective bicycle hand grip is provided with an inner portion (10) comprising an opening (14) for accommodating said handlebar, said inner portion being oriented inwards towards a stem in the mounted state, and an outer portion (12) adjacent, towards the outside, to said inner portion,
wherein said outer portion (12) is bent, as seen in the top view, with respect to said inner portion (10) in the mounted state, and
wherein said outer portion (12) runs counter to the curvature of said handlebar such that in a standard grip position, in which the driver essentially grips said outer portion (12) of said bicycle hand grip, the wrist is moved back counter to the bending of the wrist caused by the curvature of said handlebar due to the bend between said inner portion (10) and said outer portion (12).

2. The bicycle handlebar according to claim 1, **characterized in that** the outside of the inner portion (10) smoothly adjoins the outside of the outer portion (12).

3. The bicycle handlebar according to any one of claims 1 or 2, **characterized in that** a common front edge (38) of the inner portion (10) and the outer portion (12) oriented in the driving direction (37) is concavely curved.

4. The bicycle handlebar according to any one of claims 1-3, **characterized in that** the outer portion (12) comprises a heel-of-the-hand rest element (36) oriented counter to the driving direction (37).

5. The bicycle handlebar according to any one of claims 1-4, **characterized in that** a rear edge (74) of the heel-of-the-hand rest element (36) is curved downwards.

6. The bicycle handlebar according to any one of claims 1-5, **characterized in that** the outer portion (12) comprises a bulge (46) on an upper side (44) for promoting the correction of the hand position.

7. The bicycle handlebar according to any one of claims 1-6, **characterized by** an inner sleeve (18) surrounded by the inner portion (10), which preferably defines the opening (14).

8. The bicycle handlebar according to claim 7, **characterized in that** the sleeve (18) has connected thereto an in particular wing-shaped boss (38) which projects into the heel-of-the-hand rest element (36).

9. The bicycle handlebar according to any one of claims 1-8, **characterized by** a clamping element (22) preferably arranged at the inner portion (10) for clampingly fixing the bicycle hand grip to the handlebar.

10. The bicycle handlebar according to any one of claims 1-8, **characterized by** a clamping element (58) preferably arranged at the outer portion (12), which is preferably integrated in an outer contour of said outer portion (12).

11. The bicycle handlebar according to claim 10, **characterized in that** the heel-of-the-hand rest element (36) comprises a first boss (60) projecting into the clamping means (58).

12. The bicycle handlebar according to claim 10 or 11, **characterized in that** the outer portion (12) comprises a second boss (66) projecting into the clamping means (58).

13. The bicycle handlebar according to any one of claims 10-12, **characterized in that** an outside (68) of the clamping means (58) is convexly curved.

14. The bicycle handlebar according to any one of claims 1-13, **characterized in that** the outer portion (12) is connected to, preferably integrally formed with, a barend.

## Revendications

1. Guidon de bicyclette avec
deux extrémités de guidon courbées en direction du cycliste dans le sens opposé à la direction de déplacement à l'état monté du guidon de bicyclette,
dans lequel chaque extrémité de guidon présente une poignée de bicyclette, **caractérisé en ce que** la poignée de bicyclette respective est pourvue d'une partie intérieure (10) présentant une ouverture (14) pour le logement du guidon, qui est dirigée vers l'intérieur en direction d'une potence à l'état monté, et d'une partie extérieure (12) se raccordant vers l'extérieur à la partie intérieure,
dans lequel la partie extérieure (12) est coudée par rapport à la partie intérieure (10) à l'état monté dans la vue de dessus et
dans lequel la partie extérieure (12) fait effet à l'encontre de la courbure du guidon, de sorte que dans une position de préhension standard, dans laquelle le cycliste saisit sensiblement la partie extérieure (12) de la poignée de bicyclette, grâce au coude entre la partie intérieure (10) et la partie extérieure (12), un retour du poignet dans le sens opposé au coude du poignet provoqué par la courbure du guidon a lieu.

2. Guidon de bicyclette selon la revendication 1, **caractérisé en ce que** le côté extérieur de la partie intérieure (10) passe sans gradin au côté extérieur de la partie extérieure (12).

3. Guidon de bicyclette selon l'une quelconque des revendications 1 ou 2, **caractérisé en ce qu'**une arête avant (38) commune, dirigée dans le sens de déplacement (37), de la partie intérieure (10) et de la partie extérieure (12) est courbée de manière concave.

4. Guidon de bicyclette selon l'une quelconque des revendications 1-3, **caractérisé en ce que** la partie extérieure (12) présente un élément d'appui des paumes (36) dirigé dans le sens opposé à la direction de déplacement (37).

5. Guidon de bicyclette selon l'une quelconque des revendications 1-4, **caractérisé en ce qu'**une arête arrière (74) de l'élément d'appui des paumes (36) est réalisée arrondie vers le bas.

6. Guidon de bicyclette selon l'une quelconque des revendications 1-5, **caractérisé en ce que** la partie extérieure (12) présente au niveau d'un côté supérieur (44) un bombement (46) pour soutenir la correction de la position de la main.

7. Guidon de bicyclette selon l'une quelconque des revendications 1-6, **caractérisé par** une douille (18) intérieure, entourée par la partie intérieure (10), qui réalise de préférence l'ouverture (14).

8. Guidon de bicyclette selon la revendication 7, **caractérisé en ce qu'**un appendice (38) en particulier en forme d'aile, qui dépasse dans l'élément d'appui des paumes (36), est relié à la douille (18).

9. Guidon de bicyclette selon l'une quelconque des revendications 1-8, **caractérisé par** un élément de serrage (22) agencé de préférence à la partie intérieure (10) pour la fixation par serrage de la poignée de bicyclette au guidon.

10. Guidon de bicyclette selon l'une quelconque des revendications 1-8, **caractérisé par** un élément de serrage (58) agencé de préférence à la partie extérieure (12), qui est intégré de préférence dans un contour extérieur de la partie extérieure (12).

11. Guidon de bicyclette selon la revendication 10, **caractérisé en ce que** l'élément d'appui des paumes (36) présente un premier appendice (60) dépassant dans le moyen de serrage (58).

12. Guidon de bicyclette selon la revendication 10 ou 11, **caractérisé en ce que** la partie extérieure (12) présente un deuxième appendice (66) pénétrant dans le moyen de serrage (58).

13. Guidon de bicyclette selon l'une quelconque des revendications 10-12, **caractérisé en ce qu'**un côté extérieur (68) du moyen de serrage (58) est incurvé de manière convexe.

14. Guidon de bicyclette selon l'une quelconque des revendications 1-13, **caractérisé en ce que** la partie extérieure (12) est réalisée reliée à un bar-end, de préférence d'un seul tenant.
